# EUROPEAN PATENT SPECIFICATION

(11) **EP 3 855 303 B1**
(45) Date of publication and mention of the grant of the patent: **02.08.2023**
(21) Application number: 20194496.4
(22) Date of filing: 04.09.2020
(51) Int. Cl.: G06F 3/06, G06F 12/02

(54) **TECHNIQUES TO ACCESS NON-VOLATILE MEMORY USING DECK OFFSET**
TECHNIKEN ZUM ZUGRIFF AUF EINEN NICHTFLÜCHTIGEN SPEICHER UNTER VERWENDUNG VON DECK-OFFSET
TECHNIQUES D'ACCÈS À UNE MÉMOIRE NON VOLATILE UTILISANT UN DÉCALAGE DE PONT

(30) Priority: 24.01.2020 US 202016751863
(43) Date of publication of application: 28.07.2021
(73) Proprietor: INTEL Corporation, Santa Clara, CA 95054 (US)
(72) Inventor: SHAH, Ashir G., Santa Clara, CA 95054 (US); DAMLE, Prashant, Santa Clara, CA 95054 (US); MANTEGAZZA, Davide, Santa Clara, CA 95054 (US)
(74) Representative: Rummler, Felix

(56) References cited:
- US-A1- 2019 188 073
- US-A1- 2019 347 151
- US-A1- 2019 347 170

## Description

### FIELD

The descriptions are generally related to memory, and more particularly, to techniques for accessing multi-deck non-volatile memory using a deck offset.

### BACKGROUND

Memory resources have innumerable applications in electronic devices and other computing environments. There is demand for memory technologies that can scale smaller than traditional memory devices. However, continued drive to smaller and more energy efficient devices has resulted in scaling issues with traditional memory devices. Three-dimensional memory devices emerged as a solution to the scaling limitations of traditional memory devices.

US2019/0347170A1 describes techniques for remapping portions of an array of non-volatile memory (NVM) resident on a die, in which the die is one of a plurality of NVM dice forming a memory device. A processing device partitions the NVM into a plurality of subslice elements comprising respective physical portions of NVM having proximal disturb relationships. The NVM has a first portion of the suslice elements allocated as user subslice elements and a second portion as spare subslice elements and the processing device performs an error analysis to identify a predetermined number of subslice elements having highest error rates for a memory domain on the die. For the identified subslice elements having the highest error rates, the processing device remaps user subslice elements to spare subslice elements that were not identified as having the highest error rates to remove subslice elements or elements having highest error rates form a user space of the NVM.

### SUMMARY OF INVENTION

The present invention is defined in the independent claims. Preferred features are recited in the dependent claims.

### BRIEF DESCRIPTION OF THE DRAWINGS

The following description includes discussion of figures having illustrations given by way of example of implementations of embodiments of the invention. The drawings should be understood by way of example, and not by way of limitation. As used herein, references to one or more "embodiments" are to be understood as describing at least one implementation of the invention that includes one or more particular features, structures, or characteristics. Thus, phrases such as "in one embodiment" or "in an alternate embodiment" appearing herein describe various embodiments and implementations of the invention, and do not necessarily all refer to the same embodiment. However, they are also not necessarily mutually exclusive.
**Figure 1A** is an example of a memory system including non-volatile memory components.
**Figure 1B** illustrates a top-down block diagram of a memory die with multiple partitions.
**Figure 1C** depicts a block diagram showing a multi-deck memory die.
**Figure 2** illustrates an example of a block diagram of a portion of a crosspoint memory array.
**Figure 3** illustrates an example of a code word.
**Figures 4A and 4B** illustrate different electrical distances between memory cells and drivers in an exemplary tile architecture.
**Figures 5A and 5B** are tables illustrating accesses with and without die offset.
**Figure 6** is a graph showing an example of electrical distances with die offset enabled.
**Figure 7A** is a block diagram illustrating an example of a memory system implementing a deck offset feature.
**Figure 7B** is an example of a truth table for a deck offset feature in a system with multiple media components.
**Figure 7C** is a table illustrating examples of an eight-component memory system with and without deck offset.
**Figure 8A** is a table illustrating accesses with deck offset and die offset enabled in a system with multiple media components.
**Figure 8B** is a graph showing an example of how deck offset can improve the average raw bit error rate for a memory system with multiple memory components.
**Figure 9** is a table illustrating an example of a single-component deck offset technique.
**Figures 10A-10D** are flow diagrams illustrating deck offset techniques.
**Figure 11** is a block diagram of a system that can implement deck offset techniques in accordance with examples described herein.
**Figure 12** provides an exemplary depiction of a computing system in which deck offset techniques can be implemented in accordance with examples described herein.

Descriptions of certain details and implementations follow, including a description of the figures, which may depict some or all of the embodiments described below, as well as discussing other potential embodiments or implementations of the inventive concepts presented herein.

### DETAILED DESCRIPTION

Described herein are techniques to access multi-deck non-volatile memory with a deck offset to enable a reduction of the effective raw bit error rate (RBER).

A variety of memory and storage technologies include multiple decks or layers of memory cells as part of the vertical address space. Adding decks or layers of memory cells results in a larger memory size per the same die size. Memory with multiple decks or layers (e.g., in the vertical direction) is typically referred to as three-dimensional (3D). Examples of multi-deck or multi-layer memory include multi-deck crosspoint memory and 3D NAND memory. Different memory technologies have adopted different terminology. For example, a deck in a crosspoint memory device typically refers to a layer of memory cell stacks that can be individually addressed. In contrast, a 3D NAND memory device is typically said to include a NAND array that includes many layers, as opposed to decks. In 3D NAND, a deck may refer to a subset of layers of memory cells (e.g., two decks of X-layers to effectively provide a 2X-layer NAND device). The term "deck" will be used throughout this disclosure; however, layer, tier, or other terms may also refer to a layer of memory cells.

Multi-deck memory typically experiences differences in electrical characteristics across decks. For example, different decks may have different RBER. A typical memory access request results in a single deck being accessed. Thus, depending on the deck accessed, memory accesses may result in significantly different RBERs. For example, memory accesses to one deck may result in an RBER that is lower than average, while memory accesses to another deck may result in an RBER that is above average and possibly outside acceptable limits. By spreading memory accesses per code word across different physical addresses in multiple decks, the RBER can be averaged across decks and reduced at a system level.

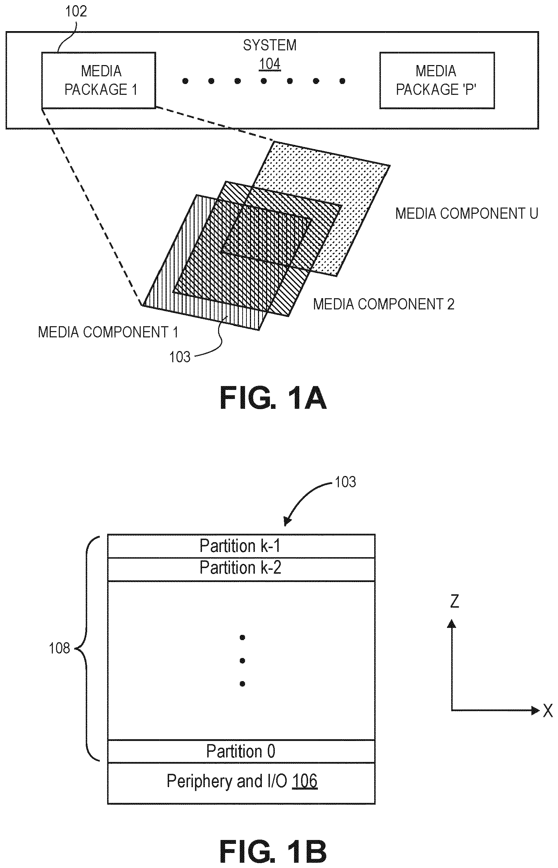

**Figure 1A** is an example of a memory system 104 including non-volatile memory components. Non-volatile memory components are used across a wide variety of systems including storage class and memory class systems. For example, non-volatile memory such as crosspoint memory and 3D NAND memory may be included in a solid state drive (SSD) to provide storage or in a dual in-line memory module (DIMM) to provide memory for servers or consumer systems.

The memory system 104 depicts how a memory system can be designed using media packages and components. The system 104 includes one or more media packages (depicted as P media packages in Figure 1A). Each media package includes one or more media component (depicted as U memory components in Figure 1A). A media component can be or include a memory die. In one example, each die is partitioned to include multiple partitions. A partition includes a group or unit of memory cells. In one example, partitions can be operated (read from or written to) simultaneously to service a given memory access request. In one such example, a partition includes a number of cells or tiles that are physically adjacent to one another.

**Figure 1B** illustrates a top-down block diagram of a memory die with multiple partitions. The memory die 103 depicts k partitions 108. The die also includes periphery and I/O (input/output) circuitry 106. The periphery and I/O circuitry typically include CMOS circuitry to enable operation and control of the partitions 108 of the die 103. The partitions 108 are shown as blocks of tiles spanning the length of the die 103, however, partitions can be arranged in a variety of shapes, size, and orientations. One or more partitions can be simultaneously accessed. The number of bits accessed simultaneously depends on the design of the memory system 104.

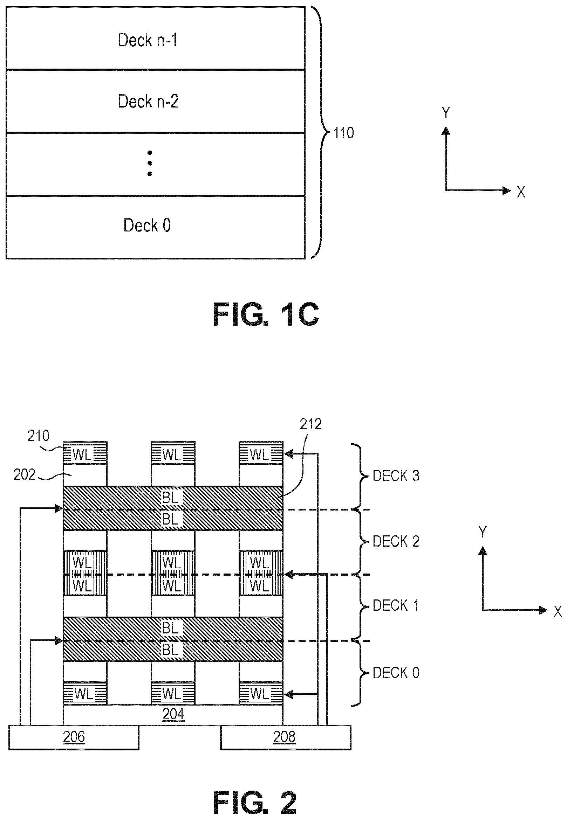

As mentioned briefly above, modern memory dies typically have multiple layers or decks of memory cells in the vertical direction. **Figure 1C** depicts a block diagram showing a multi-deck memory die. The die illustrated in Figure 1C includes n decks 110. Depending on the memory technology, the number of decks or layers of memory cells may be, for example, 2, 4, 8, or in the tens or hundreds. **Figure 2** illustrates an example of a block diagram of a portion of a crosspoint memory array with four decks (Decks 0, 1, 2, and 3). Each crosspoint memory deck includes a crosspoint array. A cross point array includes a stack of materials including a storage material and conductive layers, which are patterned to form an array of memory cells 202 with conductive access lines (e.g., wordlines 210 and bitlines 212). The memory cells include a material capable of being in two or more stable states to store a logic value. In one example, the memory cells 202 include a phase change material and/or a chalcogenide material. However, deck offset techniques are not limited to a specific storage material. The wordlines 210 and bitlines 212 are typically patterned so that the wordlines are orthogonal to the bitlines, creating a grid pattern or "cross-points." A cross-point is an intersection between a bitline, a wordline, and active material(s) (e.g., a selector and/or a storage material). A memory cell is located at the intersection of a bitline and a wordline. Thus, in the example illustrated in Figure 2, each deck includes memory cells 202, wordlines 210 and bitlines 212. An electrically isolating material 204 separates the access lines 210 of the bottom deck from bitline sockets 206 and wordline sockets 208 via which the memory cells 202 can be coupled with access and control circuitry for operation of the memory array. The crosspoint memory array of Figure 2 is one example of a multi-deck memory, however, the techniques described herein are not limited to crosspoint memory, but any memory device with multiple layers or decks of memory cells.

Thus, memory systems can be designed to have one or more packages, each of which can include one or more memory dies. Each memory die may include multiple partitions and multiple decks. Depending on the memory system design, memory accesses may have varying levels of concurrency in accessing the packages, dies, partitions, and decks. In one example, the bits concurrently accessed by the memory system for a single access is called a code word.

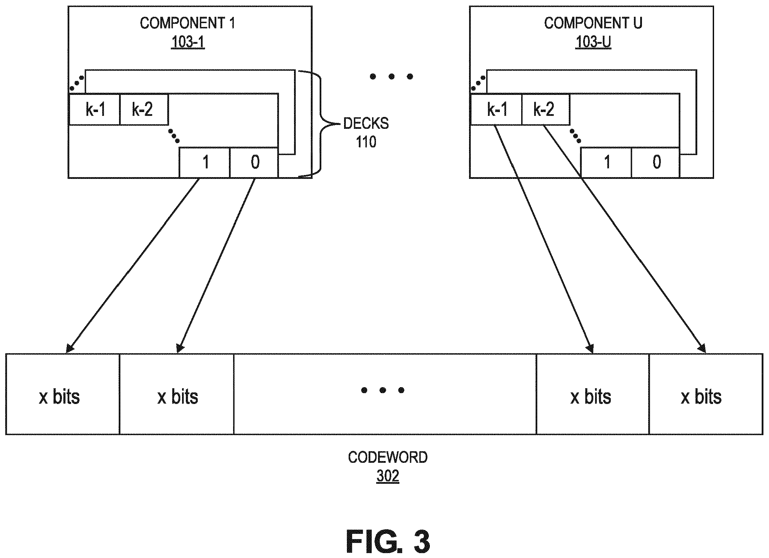

An example of a code word is illustrated in **Figure 3.** Figure 3 illustrates an example of a memory system with U components or dies 103-1-103-U. Each component includes k partitions. The components 103-1-103-U can be included in one or more packages. In the illustrated example, two partitions from each component are accessed for a single memory access request (e.g., a read or write request from a host). Thus, assuming the size of each partition is x bits, the codeword size in (x × 2 × U (x times 2 times U)) bits. Although Figure 3 illustrates a memory system with multiple components, other examples may include a single component. Also, in other examples a single memory access may involve accessing fewer (e.g., one) or more (e.g., more than two) partitions. In an example in which each access involves accessing fewer than all the partitions, the partitions accessed can be the same for each component, or different partitions for different components.

Some memory systems implement address offset or die offset to spread out accesses across different physical addresses (e.g., different physical partitions) within the same deck for the same logical address. Address offset involves accessing different physical addresses within the same deck for different accesses for the same logical address, be it in the same media component or across multiple different media components. Die offset is similar to address offset, but it involves accessing different physical addresses within the same deck for different accesses for the same logical address across multiple different media components. Figure 3 illustrates an example of a codeword 302 accessed in a system in which die offset is implemented. Specifically, Figure 3 shows an example in which a memory access involves accessing partitions 0 and 1 of component 1 and partitions k-2 and k-1 of component U for a given access.

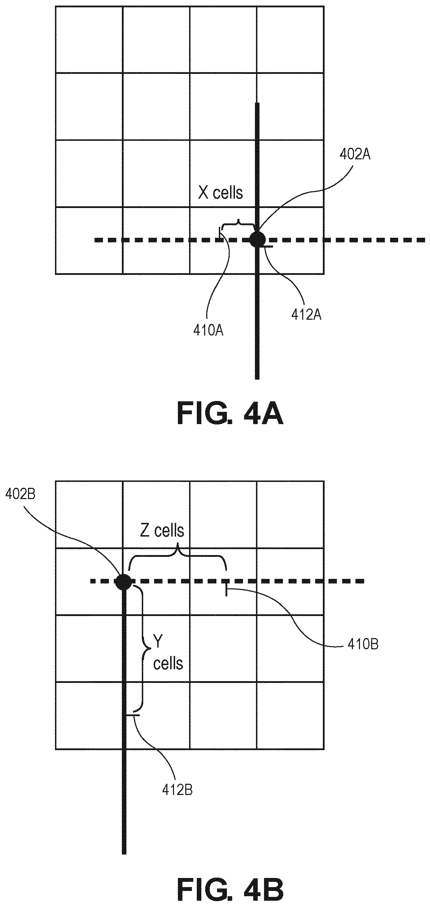

Die offset is one way to address some of the different electrical behavior and characteristics that may be observed for different memory cells located in different physical locations in an array. For example, the location of a memory cell relative to the wordline and bitline drivers can impact the likelihood and severity of errors stemming from write and read operations. The distance to the memory cell from the drivers (e.g., bitline and wordline drivers) in terms of resistance is referred to the electrical distance. **Figures 4A and 4B** illustrate different electrical distances between memory cells and drivers in an exemplary tile architecture.

Figure 4A shows a top-down view of a tile architecture which may have one or multiple wordline drivers and one or multiple bitline drivers. The example in Figure 4A shows the location of a single memory cell 402A relative to drivers. The memory cell 402A is accessed by drivers via a wordline decoder socket 412A and a bitline decoder socket 410A. In one example, a socket includes the array's conductive interconnects (e.g., vias) to connect the metal layers of the CMOS circuitry to the metal layers of the memory array. The memory cell 402A is near the wordline driver and the bitline driver in terms of the number of memory cells separating the cell 402A from the sockets 410A and 412A. For example, Figure 4A illustrates an example in which the memory cell 402A is separated from the wordline decoder socket 412A by zero memory cells and separated from the bitline decoder socket 410A by X memory cells. Therefore, the memory cell 402A is separated from the sockets by a distance of X total memory cells. The number of cells can be translated to distance and hence resistance (depending on WL and BL thickness). In the example illustrated in Figure 4A, X is a relatively small number; therefore, the electrical distance between the memory cell 402A and the sockets 410A and 412A is relatively small (referred to as near electrical distance "ED"). In an electrical distance scale of 0-10, the electrical distance between the memory cell 402A and the sockets 410A and 412A can be said to be one (ED1).

The example in Figure 4B shows the location of a different memory cell 402B relative to drivers. The memory cell 402B is accessed by drivers via a wordline decoder socket 412B and a bitline decoder socket 410B. Compared to the memory cell 402A of Figure 4A, the memory cell 402B is further from the decoder sockets 410B and 412B in terms of the number of memory cells separating the cell 402B and the sockets 410B and 412B. In the example illustrated in Figure 4B, the memory cell 402B is separated from the wordline decoder socket by Y cells and separated from the bitline decoder socket by Z cells. Therefore, the memory cell 402B is separated from the sockets 410B and 412B by Y+Z memory cell. In the illustrated example, Y+Z is a relatively large number; therefore, the electrical distance between the memory cell 402B and the sockets 410B and 412B is larger (referred to as far electrical distance "ED"). In an electrical distance scale of 0-10, the electrical distance between the memory cell 402B and the sockets 410B and 412B can be said to be ten (ED10).

As mentioned briefly above, the electrical distance of a memory cell from the drivers can impact the likelihood and severity of errors stemming from write and read operations. In one example, an ideal electrical distance may be in between near and far ED. For example, if ED1 is the shortest electrical distance and ED10 is the farthest electrical distance, memory cells with an electrical distance of ED5 may exhibit more desirable electrical behavior than memory cells with near or far electrical distance. For example, memory cells with near ED may experience higher than average errors related to read disturb, and memory cells with far ED may experience higher than average errors related to write disturb. Therefore, for a given access, if memory cells having similar electrical distances are accessed from each component, the average electrical distance for the access may be skewed towards the minimum or maximum ED (e.g., near or far ED).

Address offset and die offset can move the average ED for accesses closer to the desired ED by accessing different physical locations (and thus different EDs) for accesses to the same logical address. Address offset can be used within a single component, while die offset is across multiple components. For example, address offset can enable memory accesses to a same logical address to access different physical addresses (e.g., different physical partitions). Thus, the benefits of address offset may be an improved average ED over multiple accesses. In contrast, the benefits of die offset may be seen in a single access to a package with multiple components. For example, each die can have a die offset (e.g., 0, 2, 4, 8, etc.). The die offset causes an access to a same logical address to access different physical addresses on the die.

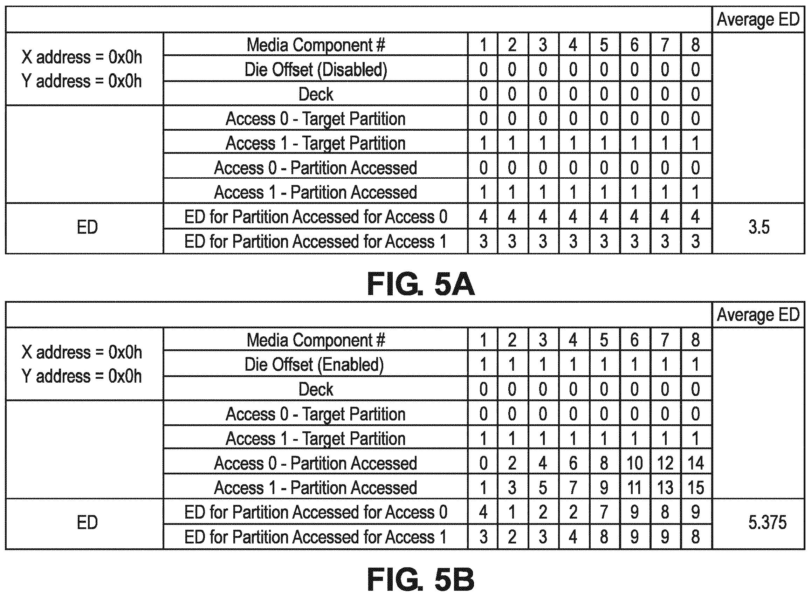

**Figures 5A and 5B** are tables illustrating accesses with and without die offset. Figure 5A illustrates an example of an access without die offset. Figure 5B illustrates an example of an access with die offset. Both Figures 5A and 5B illustrate examples of memory accesses to address OxOh in a memory system in which a package includes eight media components (e.g., media components 1-8). The eight media components may be in one or more (e.g., 2, 4, or 8) media packages. For example, a memory system with eight media components could include eight single-die packages (SDP), four dual-die packages (DDP), two quad-die packages (QDP), or one eight-die package (ODP). Although the examples in Figures 5A and 5B illustrate eight media components, die offset can apply to other numbers of dies (e.g., two or more media components).

Figures 5A and 5B illustrate memory access requests that target deck 0, which is shown by the "Os" in the Deck row of the tables in Figures 5A and 5B. In this example, each memory component is accessed to service the memory access requests. The tables show two accesses (Access 0 and Access 1), which target partitions 0 and 1, respectively, in each media component. A memory access request targets a partition if, for example, the access request includes a logical address targeting the partition. For example, referring to Figure 3, the codeword 302 would include x bits from accesses 0 and 1 (e.g., partitions 0 and 1). In the example of Figure 5A, these partitions are accessed simultaneously for a single memory access request; however, the memory system could be designed and configured to access fewer than or more than two partitions per media component for a single memory access request.

In Figure 5A, die offset is disabled, which is illustrated by the "Os" in the Die offset row of the table. Therefore, the partitions that are accessed are the same partitions that are targeted by the memory access request. For example, Access 0 targets partition 0, and therefore partition 0 is the physical partition that is accessed. Access 1 targets partition 1, and therefore partition 1 is the physical partition that is accessed. Each partition is at a particular electrical distance from the drivers. In the example illustrated in Figure 5A, partition 0 has an ED of 4 and partition 1 has an ED of 3. Therefore, the average ED for the memory access request is 3.5.

In contrast, die offset is enabled in the example illustrated in Figure 5B, which is illustrated by the " 1 s" in the Die offset row of the table. Therefore, the partition accessed is based on the target partition and the die offset for the media component. In the illustrated example, the partitions accessed for media component 1 for accesses 0 and 1 are the same partitions that are targeted. Therefore partitions 0 and 1 are the physical partitions that are accessed for component 1. However, the partitions accessed for the other media components (2-8) are offset, and therefore the partition that is accessed is not the target partition. For example, for media component 2, partition 2 is accessed for Access 0 and partition 3 is accessed for Access 1. For media component 3, partition 4 is accessed for Access 0 and partition 5 is accessed for Access 1, and so forth. Because more partitions are accessed with various electrical distances from the drivers, the average ED is different for the example with die offset compared to the example without die offset. In the example illustrated in Figure 5B, the average ED is 5.375, which may be closer to the desired die offset.

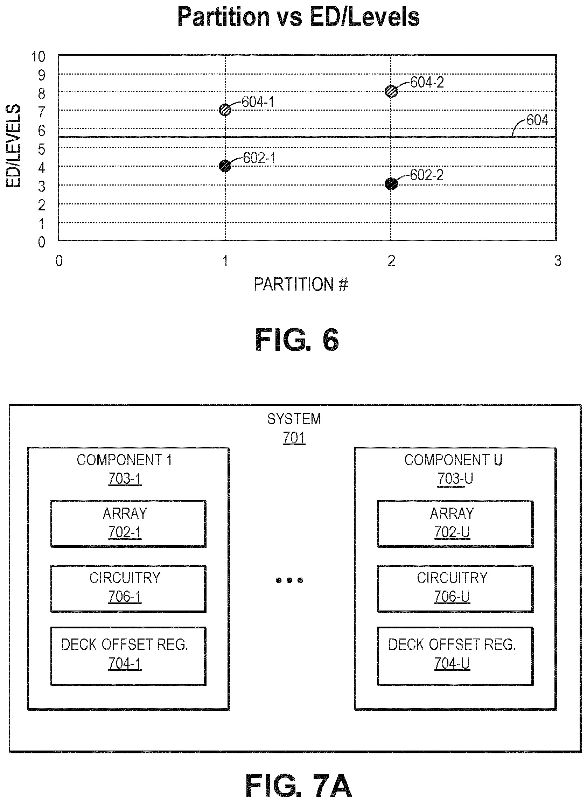

**Figure 6** is a graph showing an example of electrical distances with die offset enabled. In the example in Figure 6, consider a memory system with two single-die packages, for a total of two media components. In this example, the die offset can be set to a value between OxOh (no offset) to some non-zero maximum offset (max offset), where possible die offset values may be based on the number of partitions per component and the number of partitions accessed for a single memory access request. In the example in Figure 6, consider a case in which one media component has a die offset of OxOh, while another media component has a non-zero die offset. In this example, if the logical address is OxOh (e.g., x = y = OxOh), then partitions 1 and 2 would be accessed when there is no die offset. Therefore, for the component with a die offset of OxOh, partitions 1 and 2 are accessed. As shown in Figure 6, partitions 1 and 2 have electrical distances of 4 and 3, respectively, as shown by data points 602-1 and 602-2.

If there were no die offset, partitions 1 and 2 would be accessed for both media components, resulting in an average ED of 3.5 for the memory access. However, in the example illustrated in Figure 6, the second component has a non-zero die offset. The non-zero die offset results in partitions other than 1 and 2 being access (for example, partitions 3 and 4). In the illustrated example, the partitions 3 and 4 have an ED of 7 and 8, respectively, as shown by data points 604-1 and 604-2. Because different partitions are accessed for the second component, the average ED for the memory access becomes 5.5, as shown by the line 604. Assuming a range of 10 possible EDs, die offset enables bringing the average ED closer to the ideal average ED.

In addition to variations in ED across partitions in the same deck, there may also be variations in electrical behavior or characteristics across different decks. For example, the raw bit error rate (RBER) may be significantly different for the same electrical distance in different decks. Deck offset techniques can enable spreading out memory accesses across decks to lower the average RBER. Deck offset can be implemented in single-die memory systems or memory systems with multiple dies. In multi-die deck offset, a deck offset across different media components can enable access to different physical addresses across multiple decks as a function of one logical address (e.g., a logical address that includes one logical deck address). In one such example, a deck offset technique involves modifying the incoming deck address and physically addressing a different deck based on user registers. In single-die deck offset, a deck offset across different partitions in a single media component can enable spreading out the accesses across multiple decks.

**Figure 7A** is a block diagram illustrating an example of a memory system implementing a deck offset feature. In the example illustrated in Figure 7A, the system 701 includes one or more media components 703-1-703-U. In one example, the media components 703-1-703-U are non-volatile memory components. The one or more media components 703-1-703-U can be the same as, or similar to, the media components 103 discussed above with respect to Figure 1A-1C. Each of the non-volatile memory components include multiple decks. Each of the multiple decks includes an array of non-volatile memory cells. For example, each of the media components 703-1-703-U includes multiple decks such as illustrated in Figure 1C. Each deck includes one or more memory array (e.g., arrays 702-1-702-U). Each media component also includes circuitry (e.g., circuitry 706-1-706-U) to receive memory access requests and access a portion of the memory array. For example, each component includes input/output (I/O) circuitry to receive memory access requests and decode and access circuitry to access the appropriate part of the memory array based on the received address. In a memory system with one or more multi-deck memory components, the address includes a deck address to indicate which deck to access.

Unlike in conventional memory systems where a given deck address results in the same deck being accessed for each memory component and each partition, the system 701 implements a deck offset feature. The example in Figure 7A includes a deck offset register in each component. In one example, such as in multi-component deck offset, the deck offset registers 704-1-704-U enable a different physical deck to be accessed for a given logical deck address depending on the value stored in the deck offset register for that media component. The deck offset register can include one or more bits to indicate a target physical deck to be accessed (e.g., an offset) for each input deck. The register can be a programmable user register (e.g., programmable via a mode register write command) or a read-only register. In other examples, the deck offset can be implemented without a register, such as via fuses or hardwired.

Regardless of whether a register is used to set a deck offset, the deck offset enables spreading out accesses across different decks. For example, consider an example in which a memory access request is received at a memory system with multiple memory components. The memory access request includes a logical deck address to indicate which deck is targeted by the memory access request. The decode/access circuitry of each component accesses a physical deck based on a deck offset for each component. For example, a first deck of a first component may be accessed, and a second deck of a second component may be accessed in response to receipt of the memory access request to the same logical deck.

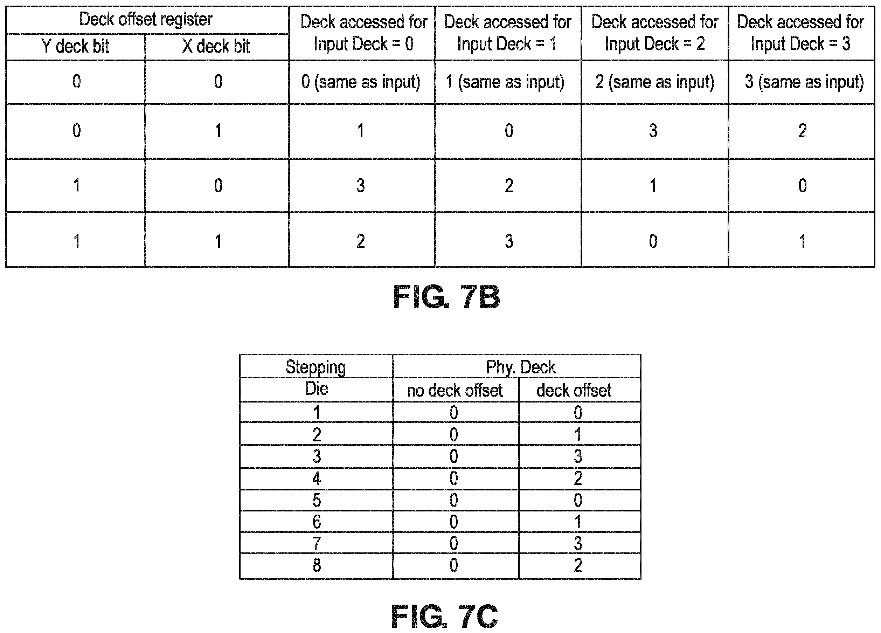

**Figure 7B** is an example of a truth table for a deck offset feature in a memory system with multiple memory components. The table in Figure 7B shows one example of how the incoming deck address can be modified so that a different physical deck is accessed based on the deck offset register. In one example, each memory component in the memory system includes an independent deck offset register. The first two columns of the table show values for a two-bit register. The first row shows a value of "0x0" (Y deck bit = 0 and X deck bit = 0). In one example, "0x0" indicates that there is no offset and that the deck accessed will be the same as the input deck of the logical deck address. The last three rows show different deck offsets. For example, the second row shows a deck offset of "0x1" (Y deck bit = 0 and X deck bit = 1). The third row shows a deck offset of "0x3" (Y deck bit = 1 and X deck bit = 1).

The last four columns of the table in Figure 7B show the physical deck accessed for a given input deck based on the register value. For example, if the input deck is deck 0 and the deck offset register is 0x0, the physical deck addressed will be deck 0. If the input deck is 0 and the deck offset register is 0x1, the physical deck addressed will be deck 1. If the input deck is deck 0 and the deck offset register is 0x2, the physical deck addressed will be deck 3, and so forth. The table in Figure 7B shows one example of how the physical deck can be determined based on the input deck and deck offset register, however, other mappings are possible.

**Figure 7C** is a table illustrating examples of an eight-component memory system with and without deck offset. The first column of the table of Figure 7C shows the die number (dies 1-8). The examples in Figure 7C assume the input deck is deck 0. The second column of the table shows an example in which deck offset is either not implemented or not enabled. Therefore, the physical deck accessed is deck 0 for all dies. The third column of the table shows an example in which deck offset is implemented and enabled. Therefore, the physical deck accessed for the dies is different depending on the setting for that die. For example, physical deck 0 is accessed for dies 1 and 5 (no offset). Physical deck 1 is accessed for dies 2 and 4. Physical deck 3 is accessed for dies 3 and 5. Physical deck 2 is accessed for dies 4 and 8. Thus, for the same logical deck address (i.e., the logical deck address for input deck 0), different decks are accessed by different dies. In the example illustrated in Figure 7C, the number of non-volatile memory components (e.g., 8) in the memory system is a multiple of a number of decks (e.g., 4) in each of the non-volatile memory components. In some examples, memory systems in which the number of components is a multiple of the number of decks may enable a bigger reduction of the average RBER than memory systems in which the number of components is not a multiple of the number of decks.

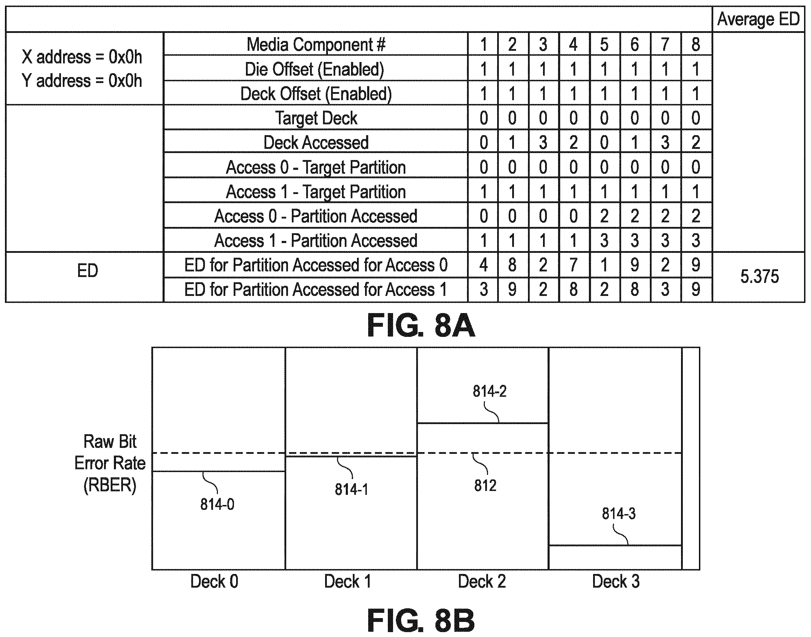

**Figure 8A** is a table illustrating accesses with deck offset and die offset enabled in a system with multiple components. The example in Figure 8A illustrates memory accesses to address OxOh (e.g., the X address = OxOh and Y address = OxOh) in a memory system in which a package includes eight media components (e.g., media components 1-8). The eight media components may be in one or more (e.g., 2, 4, or 8) media packages. For example, a memory system with eight media components could include eight single-die packages (SDP), four dual-die packages (DDP), two quad-die packages (QDP), or one eight-die package (ODP). Although the example in Figure 8A illustrates eight media components, deck offset can apply to other numbers of dies (e.g., two or more media components).

Figure 8A illustrates a memory access request that targets deck 0, which is shown by the "0s" in the Target Deck row of the table. However, because deck offset is enabled, the physical deck accessed for some media components is a deck other than deck 0. For example, deck 1 is accessed for media components 2 and 6; deck 2 is accessed for media components 4 and 8; and deck 3 is accessed for media components 3 and 7.

In addition to deck offset, the example in Figure 8A also shows die offset. The table shows two accesses (Access 0 and Access 1), which target partitions 0 and 1, respectively, in each media component. For media components 1-4, there is no die offset; therefore, the partitions accessed are the target partitions. For media components 5-8, there is a die offset in addition to the deck offset; therefore, the partitions accessed for components 5-8 are different than the target partitions (e.g., partition 2 for Access 0 and partition 3 for Access 1).

Due to the die offsets, the electrical distance for the partitions accessed for Access 0 and Access 1 are different for each component. Like in Figure 5B, the example illustrated in Figure 8A has an average ED of 5.375. Thus, the same improvement in average ED can be achieved as when using die offset alone. However, deck offset can further enable improvement in the average raw bit error rate for the memory system.

**Figure 8B** is a graph showing an example of how deck offset can improve the average raw bit error rate for a memory system with more than one memory component. In the example in Figure 8B, different decks exhibit different RBERs. The x-axis in Figure 8B is the deck number. In the example illustrated in Figure 8B, there are four decks (Deck 0, Deck 1, Deck 2, and Deck 3). The y-axis is the raw bit error rate (RBER). The lines 814-0-814-3 show the average RBER for each deck with address offset enabled, but deck offset disabled. In this example, each deck exhibits a different average RBER. For example, Deck 2 has a relatively high RBER (814-2), Deck 3 has a relatively low RBER (814-3), and Decks 0 and 1 have RBERs (814-0 and 814-1) that are in between the RBERs of Decks 2 and 3.

In one example, the average RBERs are different for different decks because the RBER associated with the electrical distances may be different for different decks. For example, assuming that each deck includes partitions that may have electrical distances between ED1 and ED10, the RBER for ED1 in deck 3 may be significantly lower than the RBER for ED1 in deck 2. Because of the variance in RBERs for different decks, some decks may exhibit unacceptably high error rates. In the example of Figure 8B, Deck 2 may exhibit an error rate that exceeds acceptable limits, while the other decks may have acceptable error rates. Thus, although address or die offset may improve the average electrical distance and error rate in a given deck, some decks may still have undesirable average electrical distance and unacceptably high error rates.

Using a deck offset, such as explained above, can enable improving the average RBER while maintaining desired ED across decks. For example, the dotted line 812 in Figure 8B shows an average RBER across decks for a memory system with deck offset enabled. As can be seen in Figure 8B, enabling deck offset results in an average RBER that is lower than the highest deck error rate, and therefore can bring decks that may otherwise have unacceptably high error rates within an acceptable range.

The deck offset technique described above enables accessing multiple decks per code word if the system has more than one media component. Thus, the average RBER reduction that can be achieved via the multi-component deck offset technique is ineffective for memory systems with a single media component. However, a single-component deck offset technique enables accessing different decks within the same media component across different partitions.

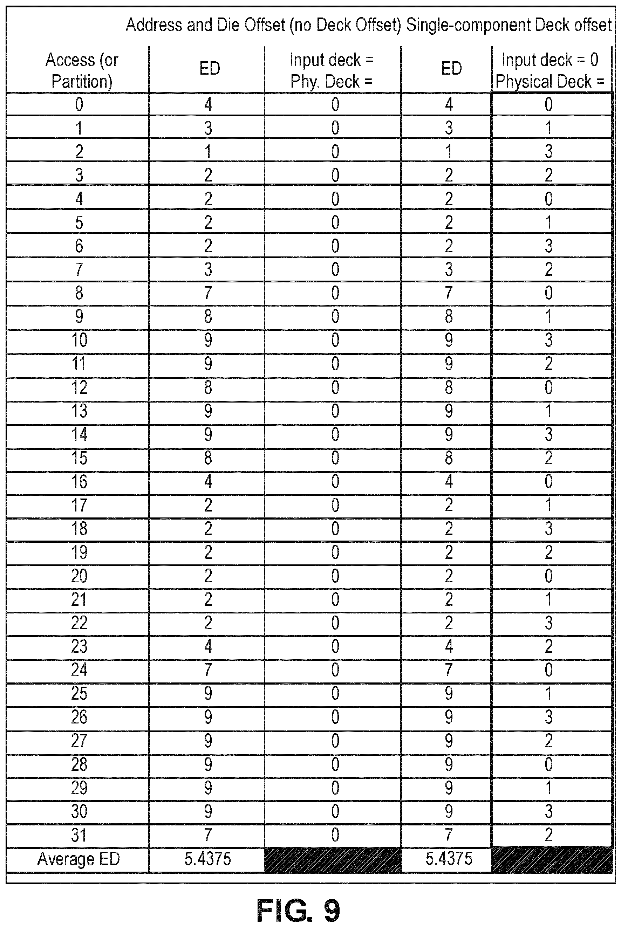

**Figure** 9 is a table illustrating an example of a single-component deck offset technique. The example in Figure 9 is for a memory system with a single component having 32 partitions (partitions 0-31). The first column in the table shows the access or partition. In this example, all 32 partitions are accessed for a given memory access request. The second and third columns show the electrical distance (ED) and deck when address and die offset are enabled, but with no deck offset. As discussed above, each partition has a particular ED, which is shown in column 2. Because there is no deck offset, the physical deck that is accessed is the same as the input deck. In the illustrated example, the input deck = the physical deck = deck 0.

The third column and the fourth column illustrate ED and deck when single-component deck offset is enabled. As can be seen in the table of Figure 9, the same memory cell location in terms of electrical distance is accessed, only at different decks. For example, partition 0 is accessed on deck 0, partition 1 is accessed on deck 1, partition 2 is accessed on deck 3, and so forth. Note that in the illustrated example, there are four decks, so the deck offsets are repeated for every four partitions. For example, partitions 0 and partition 4 are accessed from the same deck. Similarly, partitions 1 and 5 are accessed from the same deck. In the illustrated example, this stepping repeats for all partitions. In one such example, you can achieve maximum RBER reduction when the number of accesses (partitions) are a multiple of the total number of decks. Other examples may include non-repeating deck offsets (e.g., the deck offsets assigned to partitions 0-3 may be different than the deck offsets assigned to partitions 4-7). In one example, the deck offset feature may be enabled or disabled (e.g., with a register). The deck offset (e.g., what physical deck is accessed for a given input deck for each partition) may be hardwired or configurable (e.g., with a register).

Because the same physical location is accessed in terms of how far the memory cells are from the wordline and bitline drivers, the ED is the same when deck offset is enabled. However, in addition to achieving an improved ED with the address and die offset, the RBER can be reduced by spreading out accesses across all the decks. Thus, you can have a minimum of one media component and still expect to see RBER reduction because accesses within the same media component will be spread out across different physical locations (including different physical decks). This enables design of systems with a minimum of one media component while using the deck offset feature.

Both the multi-component and single-component deck offset techniques can enable a reduction in RBER in systems with more than one deck. Both deck offset techniques enable accessing different physical decks for the same input deck address. The deck offset techniques are effective for memory systems with different numbers of partitions per media component, different numbers of bits operated on per given access (or partition), different numbers of packages in a system, and a different numbers of components per package. Existing techniques are limited to accessing the same deck for the same logical address as part of all the accesses within a code word. Unlike existing techniques, deck offset techniques enable accessing different physical locations of cells across multiple different decks for the same logical address.

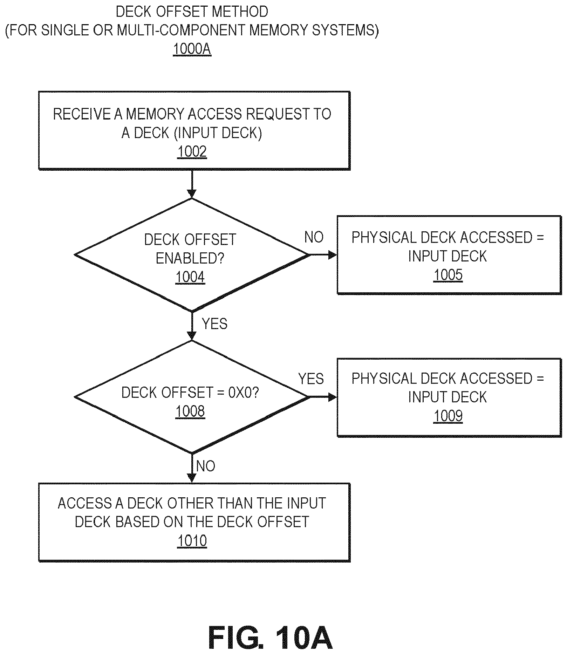

**Figures 10A-10D** are flow diagrams illustrating deck offset techniques. The methods of Figures 10A-10D can be performed by hardware (e.g., circuitry), firmware, software, or a combination of hardware, firmware, and software.

**Figure 10A** is a flow diagram illustrating a deck offset technique that can be implemented in a single-component or multi-component system. For example, referring to Figure 1A, the method 1000A can apply to a memory system 104 with 1 media component 103 or a plurality of media components 103. Each media component includes multiple decks. For example, referring to Figure 1C, each of the one or more media components in the memory system includes multiple decks 110. Each deck includes non-volatile memory cells that can be organized into one or more tiles, arrays, and partitions.

The memory system receives a memory access request, at 1002. For example, a processor (or other device that generates memory access requests) sends a memory access request to the memory system. The memory access request can be, for example, a read or a write/program request. In an example in which the memory system includes crosspoint memory components, a write request may be a set or reset request. Input/output (I/O) circuitry at the memory system level, package level, and component level receives signals in response to a memory access request. The memory access request includes a logical address of the memory cells to be accessed by the request. In a memory system with multi-deck components, the logical address includes a logical deck address to identify which deck the request targets.

The physical deck accessed depends on whether the deck offset feature is implemented and/or enabled. Some memory systems may always have deck offset on or off, whereas other systems may include an option to enable or disable the deck offset feature (e.g., with a deck offset enable/disable register). If deck offset is disabled, 1004 NO branch, then the physical deck accessed is the same as the input deck (e.g., the same deck targeted by the logical address), at 1005. If deck offset is enabled, 1004 YES branch, circuitry on the component determines what deck to access in response to the request to the input deck. The mapping of logical deck address to physical deck may be configurable (e.g., with one or more registers) or hard-wired. If the setting indicates no deck offset (e.g., deck offset = 0x0), 1008 YES branch, then the physical deck accessed is the same as the input deck, at 1009.

If the setting indicates that there is a deck offset (e.g., the deck offset is something other than 0x0), then a deck other than the input deck is accessed, at 1010. The deck offset can be based on the component number (e.g., in the multi-component deck offset), or based on a target partition (e.g., in the single-component deck offset).

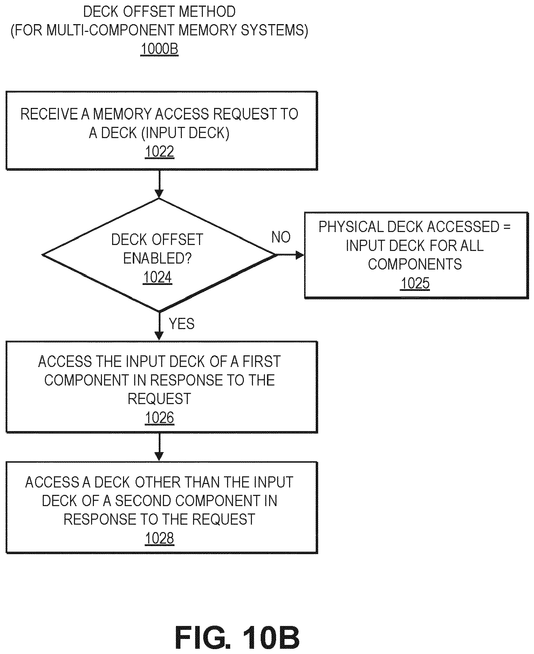

**Figure 10B** is a flow diagram illustrating one example of a multi-component deck offset technique. The method 1000B can be implemented in a system with multiple media components. For example, referring to Figure 1A, the method can be implemented in a memory system 104 with two or more media components 103. The two or more media components can be in one or more packages 102. The method 1000B begins with receiving a memory access request to a deck, at 1022. If deck offset is not enabled, 1024 NO branch, then the physical deck accessed for all media components is the input deck, at 1025. If deck offset is enabled, 1024 YES branch, then different decks may be accessed across different dies, depending on the settings. In the example in Figure 10B, the method involves accessing the input deck of a first component (e.g., a component in which the deck offset is set to OxOh), at 1026. A deck other than the input deck is accessed for a second component (e.g., for a component in which the deck offset is set to a non-zero value), at 1028.

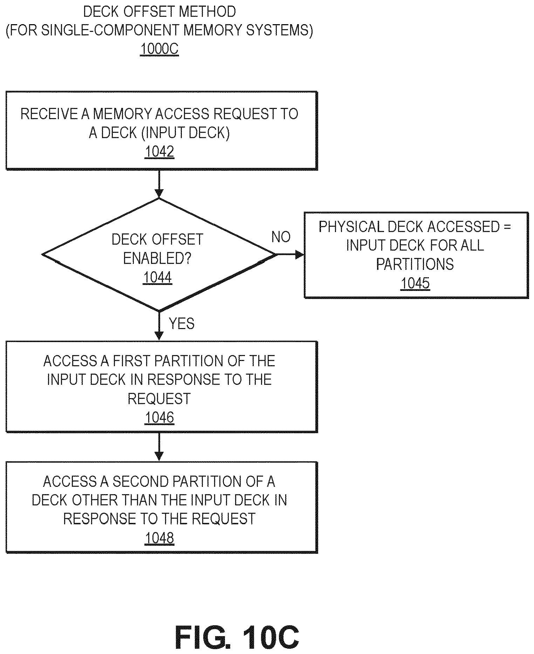

**Figure 10C** is a flow diagram illustrating one example of a single-component deck offset technique. The method 1000C of Figure 10C can be implemented in a system with single component. For example, referring to Figure 1A, the method 1000C can be implemented in a memory system 104 with a single component 103. The method 1000C involves accessing different decks across different partitions in the same component. The method 1000C begins with receiving a memory access request, at 1042. If deck offset is disabled, 1044 NO branch, then the physical decks accessed for all partitions will be the same as the input deck, at 1045. If deck offset is enabled, 1044 YES branch, the method involves accessing different decks for different partitions. In the example illustrated in Figure 10C, a first partition is accessed on a first deck, at 1046, and a second partition is accessed from a second deck, at 1048. Thus, the access can be spread across different decks within the same component.

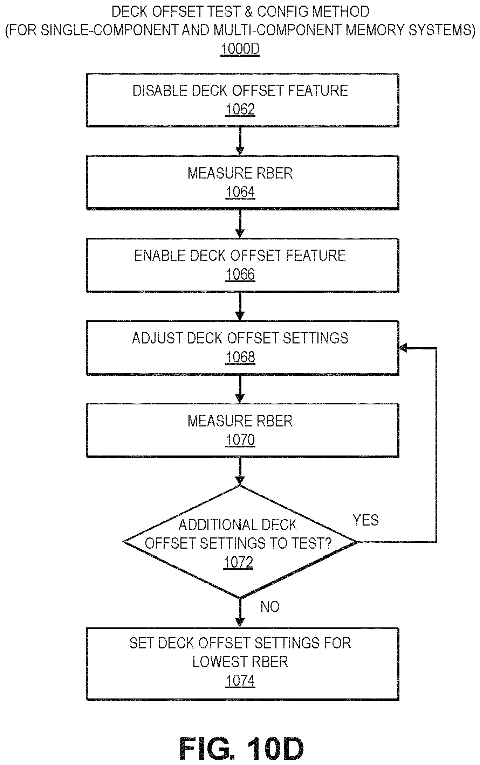

**Figure 10D** is a flow diagram illustrating one example of method for determining deck offset settings. The method 1000D can be performed by firmware. In one example, the method 1000D is performed during a test and configuration process (e.g., after manufacture but before the memory system is in use in the field). In other examples, the method may also be performed in the field (e.g., by a user).

The method 1000D begins by disabling deck offset (or if it is disabled by default, by not enabling the feature), at 1062. The average RBER is then determined by running a test to operate the memory system and measuring the RBER resulting from the test, at 1064. After measuring the RBER with the deck offset feature disabled, the method involves enabling the deck offset feature, at 1066.

After enabling the deck offset feature, different combinations of deck offset settings are tested. For example, the deck offset settings can be set or adjusted, at 1066. Setting or adjusting deck offset settings can involve, for example, setting registers to particular values to reflect the desired deck offsets. The RBER is then tested with the new settings, at 1070. While there are additional combinations of settings to test, 1072 YES branch, the method continues with adjusting the settings and measuring the RBER, at 1068 and 1070. Once the desired combinations of settings are tested, 1072 NO branch, the method involves determining the deck offset settings that resulted in the lowest average RBER for the memory system. The memory system is configured with the deck offset settings for the lowest RBER, at 1074.

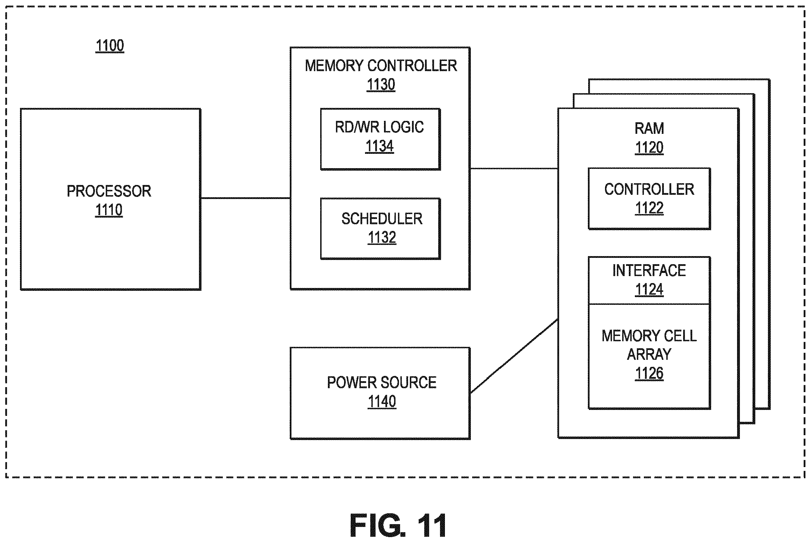

**Figure 11** is a block diagram of a system that can implement deck offset techniques in accordance with examples described herein.

System 1100 includes components of a memory subsystem having one or more memory components 1120. In one example, the memory components 1120 are part of a memory system to provide random access memory (RAM) to store and provide data in response to operations of processor 1110. The system 1100 receives memory access requests from a host or a processor 1110, which is processing logic that executes operations based on data stored in memory 1120 or generates data to store in memory 1120. The processor 1110 can be or include a host processor, central processing unit (CPU), microcontroller or microprocessor, graphics processor, peripheral processor, application specific processor, or other processor or accelerator, and can be single core or multicore.

The system 1100 includes a memory controller 1130, which represents logic to interface with memory 1120 and manage access to data stored in the memory. In one example, the memory controller 1130 is integrated into the hardware of processor 1110. In one example, the memory controller 1130 is standalone hardware, separate from the processor 1110. The memory controller 1130 can be a separate circuit on a substrate that includes the processor. The memory controller 1130 can be a separate die or chip integrated on a common substrate with a processor die (e.g., as a system on a chip (SoC)). In one example, the memory controller 1130 is an integrated memory controller (iMC) integrated as a circuit on the processor die. In one example, at least some of memory 1120 can be included on an SoC with the memory controller 1130 and/or the processor 1110.

In the illustrated example, the memory controller 1130 includes read/write logic 1134, which includes hardware to interface with the memory 1120. The logic 1134 enables the memory controller 1130 to generate read and write commands to service requests for data access generated by the execution of instructions by processor 1110.

The memory resources or cachelines in the memory 1120 are represented by a memory cell array 1126, which can include a cross-point array or other non-volatile memory array. The one or more memory components each include multiple decks. The memory 1120 includes an interface 1124 (e.g., interface logic and/or circuitry) to control the access to the memory device array 1126. The interface 1124 can include decode logic, including logic to address specific rows or columns, bit lines or word lines, or otherwise address specific bits of data. The interface logic can apply a deck offset to access different decks in accordance with examples described herein. The controller 1122 represents an on-die controller on memory components 1120 to control its internal operations to execute commands received from memory controller 1130. For example, the controller 1122 can control any of timing, voltage levels, addressing, I/O (input/output) margining, scheduling, and error correction for memory 1120. A power source 1140 is connected to the memory 1120 to provide one or more voltage rails for operation of the memory 1120.

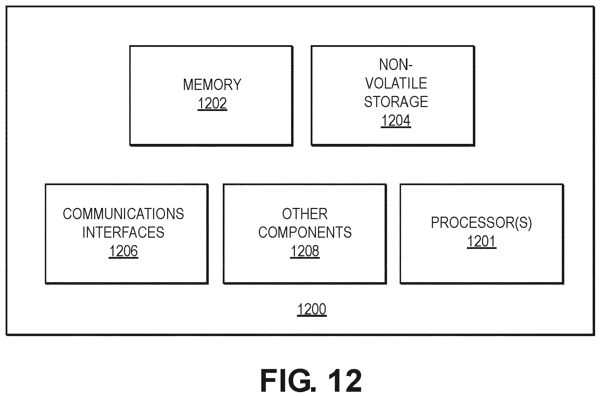

**Figure 12** provides an exemplary depiction of a computing system 1200 (e.g., a smartphone, a tablet computer, a laptop computer, a desktop computer, a server computer, etc.). As observed in Figure 12, the system 1200 may include one or more processors or processing units 1201. The processor(s) 1201 may include one or more central processing units (CPUs), each of which may include, e.g., a plurality of general-purpose processing cores. The processor(s) 1201 may also or alternatively include one or more graphics processing units (GPUs) or other processing units. The processor(s) 1201 may include memory management logic (e.g., a memory controller) and I/O control logic. The processor(s) 1201 can be similar to, or the same as, the processor 1110 of Figure 11.

The system 1200 also includes memory 1202 (e.g., system memory), non-volatile storage 1204, communications interfaces 1206, and other components 1208. The other components may include, for example, a display (e.g., touchscreen, flat-panel), a power supply (e.g., a battery or/or other power supply), sensors, power management logic, or other components. The communications interfaces 1206 may include logic and/or features to support a communication interface. For these examples, communications interface 1206 may include one or more communication interfaces that operate according to various communication protocols or standards to communicate over direct or network communication links or channels. Direct communications may occur via use of communication protocols or standards described in one or more industry standards (including progenies and variants) such as those associated with the PCIe specification. Network communications may occur via use of communication protocols or standards such those described in one or more Ethernet standards promulgated by IEEE. For example, one such Ethernet standard may include IEEE 802.3. Network communication may also occur according to one or more OpenFlow specifications such as the OpenFlow Switch Specification. Other examples of communications interfaces include, for example, a local wired point-to-point link (e.g., USB) interface, a wireless local area network (e.g., WiFi) interface, a wireless point-to-point link (e.g., Bluetooth) interface, a Global Positioning System interface, and/or other interfaces.

The computing system also includes non-volatile storage 1204, which may be the mass storage component of the system. The non-volatile storage 1204 can be similar to, or the same as, the memory 1120 of Figure 11, described above. Non-volatile storage 1204 may include byte or block addressable types of non-volatile memory having a cross-point memory structure. Non-volatile types of memory may also include other types of byte or block addressable non-volatile memory such as, but not limited to, multi-threshold level NAND flash memory (e.g., 3D NAND flash memory), NOR flash memory, single or multi-level phase change memory (PCM), resistive memory, nanowire memory, ferroelectric transistor random access memory (FeTRAM), magnetoresistive random access memory (MRAM) that incorporates memristor technology, spin transfer torque MRAM (STT-MRAM), or a combination of any of the above. In one example, the non-volatile storage 1204 may include mass storage that is composed of one or more SSDs (solid state drives), DIMMs (dual in line memory modules), or other module or drive. The memory 1202 and/or non-volatile storage can include a deck offset feature as described herein.

Various components described herein can be a means for performing the operations or functions described. Each component described herein includes software, hardware, or a combination of these. The components can be implemented as software modules, hardware modules, special-purpose hardware (e.g., application specific hardware, application specific integrated circuits (ASICs), digital signal processors (DSPs), etc.), embedded controllers, hardwired circuitry, etc.

## Claims

1. A system (104) comprising:
a first non-volatile memory component (103-1) including:
multiple decks (110), each of the multiple decks including an array of non-volatile memory cells (202);
circuitry (106) to:
receive a memory access request to access a first deck; and
access a second deck in response to the memory access request to access the first deck; **characterised by**
a second non-volatile memory component (103-2) to access a different deck than the first non-volatile memory component for a same logical deck address,
wherein each non-volatile memory component (103-1-103-U) in the memory system includes a register to indicate which physical deck is to be accessed for the same logical deck address.

2. The system (104) of claim 1, further comprising:
a register to indicate which physical deck (110) is to be accessed for a logical deck address of the memory access request.

3. The system (104) of claim 1, wherein:
a number of non-volatile memory components (103-1-103-U) in the memory system (104) is a multiple of a number of decks in each of the non-volatile memory components.

4. The system (104) of claim 1, wherein:
the circuitry (106) is to access a first partition of the first deck and a second partition of the second deck of the same non-volatile memory component (103-1) in response to the memory access request.

5. The system (104) of claim 4, wherein:
the circuitry (106) is to access a third partition of a third deck and a fourth partition of a fourth deck of the same non-volatile memory component (103-1) in response to the memory access request.

6. The system (104) of claim 5, wherein:
the number of partitions in the non-volatile memory component (103-1) is a multiple of a number of decks in the non-volatile memory component (103-1).

7. The system (104) of claim 1, wherein:
the memory access request includes a logical address targeting a partition of the non-volatile memory component (103-1); and
the circuitry (106) is to access a physical partition that is different than the partition targeted by the logical address.

8. The system (104) of claim 7, further comprising:
a register to indicate which partition is to be accessed for the partition targeted by the logical address.

9. The system (104) of claim 1, wherein:
each of the multiple decks includes a crosspoint array of non-volatile memory cells (202).

10. The system (104) of claim 1, wherein:
each of the multiple decks includes a NAND array of non-volatile memory cells (202).

11. The system (104) of claim 1, further comprising:
multiple non-volatile memory components (103-1-103-U) including features of the non-volatile memory component (103-1).

12. The system (104) of claim 11, wherein:
a number of the non-volatile memory components (103-1-103-U) in the system (104) is a multiple of a number of decks in each of the non-volatile memory components (103-1-103-U).

## Patentansprüche

1. System (104), umfassend:
eine erste nichtflüchtige Speicherkomponente (103-1) die enthält:
mehrere Decks (110), wobei jedes der mehreren Decks ein Array aus nichtflüchtigen Speicherzellen (202) enthält;
eine Schaltungsanordnung (106) zum:
Empfangen einer Speicherzugriffsanforderung für den Zugriff auf ein erstes Deck; und
Zugriff auf ein zweites Deck als Reaktion auf die Speicherzugriffsanforderung für den Zugriff auf das erste Deck; **gekennzeichnet durch**
eine zweite nichtflüchtige Speicherkomponente (103-2) für den Zugriff auf ein anderes Deck als die erste nichtflüchtige Speicherkomponente für eine gleiche logische Deckadresse,
wobei jede nichtflüchtige Speicherkomponente (103-1-103-U) in dem Speichersystem ein Register zum Angeben enthält, auf welches physische Deck für die gleiche logische Deckadresse zugegriffen werden soll.

2. System (104) nach Anspruch 1, weiter umfassend:
ein Register zum Angeben, auf welches physisches Deck (110) für eine logische Deckadresse der Speicherzugriffsanforderung zugegriffen werden soll.

3. System (104) nach Anspruch 1, wobei:
eine Anzahl von nichtflüchtigen Speicherkomponenten (103-1-103-U) in dem Speichersystem (104) ein Mehrfaches einer Anzahl von Decks in jeder der nichtflüchtigen Speicherkomponenten ist.

4. System (104) nach Anspruch 1, wobei:
die Schaltungsanordnung (106) auf eine erste Partition des ersten Decks und eine zweite Partition des zweiten Decks der gleichen nichtflüchtigen Speicherkomponente (103-1) als Reaktion auf die Speicherzugriffsanforderung zugreifen soll.

5. System (104) nach Anspruch 4, wobei:
die Schaltungsanordnung (106) auf eine dritte Partition eines dritten Decks und eine vierte Partition eines vierten Decks der gleichen nichtflüchtigen Speicherkomponente (103-1) als Reaktion auf die Speicherzugriffsanforderung zugreifen soll.

6. System (104) nach Anspruch 5, wobei:
die Anzahl von Partitionen in der nichtflüchtigen Speicherkomponente (103-1) ein Mehrfaches einer Anzahl von Decks in der nichtflüchtigen Speicherkomponente (103-1) ist.

7. System (104) nach Anspruch 1, wobei:
die Speicherzugriffsanforderung eine logische Adresse enthält, die auf eine Partition der nichtflüchtigen Speicherkomponente (103-1) abzielt; und
die Schaltungsanordnung (106) auf eine physische Partition zugreifen soll, die von der Partition verschieden ist, auf die die logische Adresse abzielt.

8. System (104) nach Anspruch 7, weiter umfassend:
ein Register zum Angeben, auf welche Partition für die Partition zugegriffen werden soll, auf die durch die logische Adresse abgezielt wird.

9. System (104) nach Anspruch 1, wobei:
jedes der mehreren Decks ein Überkreuzungspunktarray aus nichtflüchtigen Speicherzellen (202) enthält.

10. System (104) nach Anspruch 1, wobei:
jede der mehreren Decks ein NAND-Array aus nichtflüchtigen Speicherzellen (202) enthält.

11. System (104) nach Anspruch 1, weiter umfassend:
mehrere nichtflüchtige Speicherkomponenten (103-1-103-U) einschließlich Merkmalen der nichtflüchtigen Speicherkomponente (103-1).

12. System (104) nach Anspruch 11, wobei:
eine Anzahl der nichtflüchtigen Speicherkomponenten (103-1-103-U) in dem System (104) ein Mehrfaches einer Anzahl von Decks in jeder der nichtflüchtigen Speicherkomponenten (103-1-103-U) ist.

## Revendications

1. Système (104), comprenant :
un premier composant de mémoire non volatile (103-1) comportant :
de multiples étages (110), chacun des multiples étages comportant une matrice de cellules de mémoire non volatile (202) ;
une circuiterie (106) appelée à :
recevoir une requête d'accès mémoire pour accéder à un premier étage ; et
accéder à un deuxième étage en réponse à la requête d'accès mémoire pour accéder au premier étage ;
**caractérisé par**
un deuxième composant de mémoire non volatile (103-2) appelé à accéder à un étage différent du premier composant de mémoire non volatile pour une même adresse logique d'étage,
chaque composant de mémoire non volatile (103-1-103-U) dans le système de mémoire comportant un registre appelé à indiquer à quel étage physique accéder pour la même adresse logique d'étage.

2. Système (104) selon la revendication 1, comprenant en outre :
un registre appelé à indiquer à quel étage physique (110) accéder pour une adresse logique d'étage de la requête d'accès mémoire.

3. Système (104) selon la revendication 1, dans lequel :
un nombre de composants de mémoire non volatile (103-1-103-U) dans le système de mémoire (104) est un multiple d'un nombre d'étages dans chacun des composants de mémoire non volatile.

4. Système (104) selon la revendication 1, dans lequel :
la circuiterie (106) est appelée à accéder à une première partition du premier étage et à une deuxième partition du deuxième étage du même composant de mémoire non volatile (103-1) en réponse à la requête d'accès mémoire.

5. Système (104) selon la revendication 4, dans lequel :
la circuiterie (106) est appelée à accéder à une troisième partition d'un troisième étage et à une quatrième partition d'un quatrième étage du même composant de mémoire non volatile (103-1) en réponse à la requête d'accès mémoire.

6. Système (104) selon la revendication 5, dans lequel :
le nombre de partitions dans le composant de mémoire non volatile (103-1) est un multiple d'un nombre d'étages dans le composant de mémoire non volatile (103-1).

7. Système (104) selon la revendication 1, dans lequel :
la requête d'accès mémoire comporte une adresse logique ciblant une partition du composant de mémoire non volatile (103-1) ; et
la circuiterie (106) est appelée à accéder à une partition physique différente de la partition ciblée par l'adresse logique.

8. Système (104) selon la revendication 7, comprenant en outre :
un registre appelé à indiquer à quelle partition accéder pour la partition ciblée par l'adresse logique.

9. Système (104) selon la revendication 1, dans lequel :
chacun des multiples étages comporte un réseau en points de croisement de cellules de mémoire non volatile (202) .

10. Système (104) selon la revendication 1, dans lequel :
chacun des multiples étages comporte un réseau NON-ET de cellules de mémoire non volatile (202).

11. Système (104) selon la revendication 1, comprenant en outre :
de multiples composants de mémoire non volatile (103-1-103-U) comportant des caractéristiques du composant de mémoire non volatile (103-1).

12. Système (104) selon la revendication 11, dans lequel :
un nombre des composants de mémoire non volatile (103-1-103-U) dans le système (104) est un multiple d'un nombre d'étages dans chacun des composants de mémoire non volatile (103-1-103-U).
